## Europäisches Patentamt
## European Patent Office
## Office européen des brevets

(11) Publication number: **0 177 112**
**B1**

(12) **EUROPEAN PATENT SPECIFICATION**

(45) Date of publication of patent specification: **05.07.89**

(21) Application number: **85302506.2**

(22) Date of filing: **10.04.85**

(51) Int. Cl.⁴: **F 16 L 55/00**

(54) Self-traversing vehicle for pipe.

(30) Priority: **04.10.84 JP 208480/84**
**06.11.84 JP 233591/84**

(43) Date of publication of application:
**09.04.86 Bulletin 86/15**

(45) Publication of the grant of the patent:
**05.07.89 Bulletin 89/27**

(84) Designated Contracting States:
**DE FR GB IT**

(56) References cited:
**DD-A- 125 290**
**DE-A-2 335 868**
**DE-C-1 084 801**
**FR-A-2 538 602**

(73) Proprietor: **AGENCY OF INDUSTRIAL SCIENCE & TECHNOLOGY MINISTRY OF INTERNATIONAL TRADE & INDUSTRY**
**3-1 Kasumigaseki 1-chome Chiyoda-ku Tokyo (JP)**

(72) Inventor: **Okada, Tokuji**
**3-301-202 Matsushiro Yatabemachi Tsukuba-gun Ibaraki-ken (JP)**

(74) Representative: **Evans, David Charles et al**
**F.J. CLEVELAND & COMPANY 40-43, Chancery Lane London, WC2A 1JQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a vehicle for self-traversing the interior of a pipe or the like.

There is a demand for robotizing various jobs which have to be performed inside pipes, such as inspection for cracks, damage, wear, adherence of extraneous matter, deterioration or the like, examination pipe seams, laying of cables in pipes, conveyance of materials in pipes, etc. The need for robotization is especially high in cases where the work cannot be performed by the human hand in the interior of a pipe for some reason, such as when sufficient working space is not available within the pipe or when human access is impossible because of some danger. Thus, robotization is not merely directed to rationalization and elimination or reduction of labor.

Many pipes in which work has to be carried out are not of a constant diameter. Also, such pipes are often not laid horizontally. In fact, it is rather common for them to have a vertical portion, an inclined portion or a bent portion with a small radius of curvature. In some cases, the pipe may even have a twisted portion. Accordingly, it is very difficult to robotize jobs to be performed in the interior of these pipes.

On the other hand, there is also a need for robotizing jobs performed in natural caves, which generally have extremely irregular inner surfaces. Also, the diameter and cross section of such a cave usually vary greatly along its length. Accordingly, it is also difficult to robotize jobs to be performed in the interior of caves.

DE—A—23.35.868 describes a device for cleaning elongate cavities, comprising a chassis bearing a drive motor and cleaning brushes disposed on different cross-sectional planes of the chassis with the axes of rotation extending outwards, the roller brushes arranged in the form of a star with the brushes of one plane staggered relatively to those of the adjacent plane have their outer surface devised to act as running and transportation rollers for the chassis, which runs like a trolley or carriage into the pipe or tube.

DE—B—1084801 describes a motor-driven pig containing a built-in electric power supply for pulling cables through ducting, the energy supply and the motor being incorporated in a single pig housing. A switch is provided to enable the electric motor drive of the pig to be disconnected by a pull on the cable in the opposite direction to the direction of laying and when the pull in the opposite direction to the direction of laying is released the switch closes automatically so that the pig re-starts.

FR—A—2538602 provides a self-propelled device adapted to travel in large-diameter pipelines for checking and maintenance purposes, and particularly primary steam-generator pipelines in nuclear stations. The device is introduced via the steam-generator water tank and then into the pipe without the operator having to enter the steam generator, the device retracting automatically in the event of any obstacles found in the pipeline.

In order to robotize jobs to be performed in the interior of pipes, vehicles which can self-traverse the interior of a pipe have thus already been proposed. However, the proposed vehicles are not capable of traversing the interior of pipes or caves which are irregular in interior configuration.

Accordingly, it is an object of the present invention to provide a self-traversing vehicle which can be used in pipes and caves which have extremely irregular interiors.

According to a first aspect of the present invention there is provided a self-traversing vehicle comprising a main body, a pair of arm members extending outwardly from said main body in opposite directions and disposed in alignment with each other, said arm members being movable along the common longitudinal axis thereof, biasing means for biasing said arm members outwardly with respect to said main body, at least one chassis which is pivotally connected to one of said arm members and which is provided with two wheels, at least one wheel supported by the other of said arms members, a first driving device for driving at least one of said two wheels provided on said chassis, a second driving device for driving said wheel supported by the other of said arm members, at least one detecting means for detecting the angle formed between the common longitudinal axis of said arm members and the common tangential line of said two wheels of said chassis, and a servo-system for controlling said first and second driving devices in response to the detected angle so as to maintain said angle at a predetermined value.

The invention will now be described, by way of illustration only, with reference to the accompanying drawings; wherein:—

Figure 1 is a schematic view showing a first embodiment of a self-traversing vehicle according to the present invention.

Figure 2 is a side view in which the vehicle of Figure 1 is more concretely shown.

Figure 3 is an elevational view of the same.

Figure 4 is a front view showing a wheel which is used in the vehicle.

Figure 5 is a side view of the same wheel.

Figure 6 is a schematic view showing the vehicle of Figure 1 traversing the interior of a vertical pipe.

Figure 7 is a schematic view showing the vehicle of Figure 1 traversing the interior of a horizontal pipe.

Figure 8 is a schematic view showing the vehicle of Figure 1 traversing the interior of a pipe along the maximum diameter thereof.

Figure 9 is a schematic view showing a modification of the first embodiment wherein a steering device is provided in one of the arm members.

Figure 10 is a schematic view showing the vehicle of Figure 9 spirally traversing the interior of a pipe.

Figure 11 is a schematic view showing a second embodiment of a vehicle according to the present invention.

Figure 12 is a side view showing the vehicle of Figure 11 in greater detail.

Figure 13 is a schematic view showing the vehicle of Figure 11 traversing the interior of a vertical pipe.

Figure 14 is a schematic view showing the vehicle of Figure 11 traversing the interior of a horizontal pipe.

Figure 15 is a schematic view of a third embodiment of a self-traversing vehicle according to the present invention.

Figure 16 is a schematic view showing a train comprising two vehicles, which traverses the interior of a pipe.

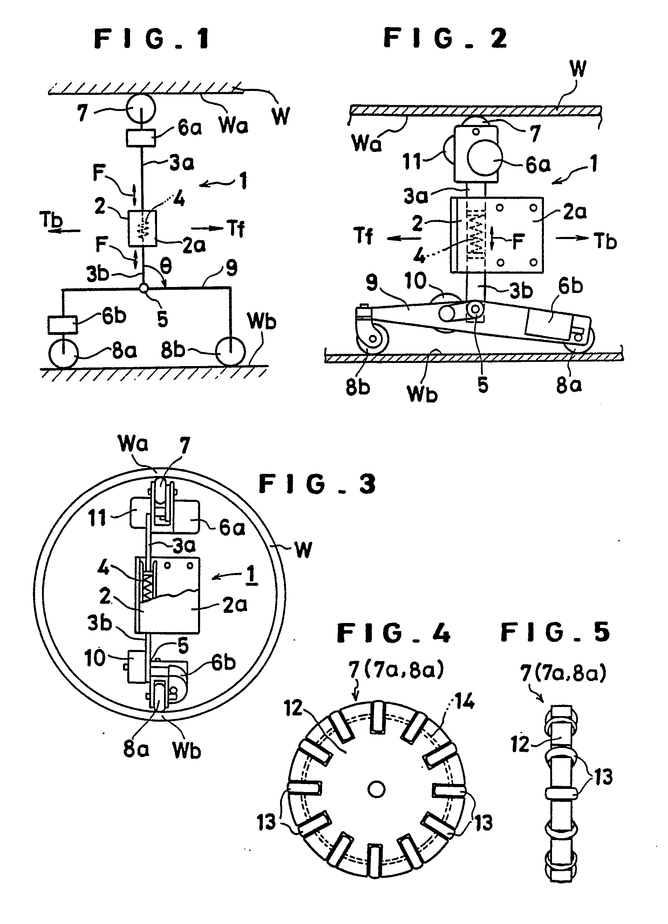

Referring to Figure 1, there is schematically shown a first embodiment of a vehicle for self-traversing the interior of a pipe or a conduit, which is constructed in accordance with the present invention.

The self-traversing vehicle 1 comprises a main body 2 having a pair of arm members 3a and 3b which extend outwardly from the main body 2 in the opposite directions and which are disposed in alignment with each other. Biasing means 4 has ends which are connected to the ends of the aligned arm members 3a and 3b, which are opposed to each other.

The biasing means 4, which is shown as a mechanical spring by a broken line in Figure 1, serves to act on the pair of arm members 3a and 3b extending in opposite directions in such a manner that they are movable away from and toward each other as shown by arrows F.

The biasing means 4 is provided within a main body 2 which may include electrocircuit systems and the like for controlling the operations of elements of the self-traversing vehicle. The main body 2 is also provided with a carrier portion 2a on its exterior so that the self-traversing vehicle 1 can carry various objects as required.

The arm member 3a has a first driving wheel 7 mounted at its free end through the intermediary of a first driving device 6a.

On the other hand, the free end of the arm member 3b is connected to a chassis 9 at its center through the intermediary of an articulation 5 so that the chassis 9 can be tilted with respect to the arm member 3b. To this end, the articulation 5 may, for example, comprise a pivot pin which is rotatable only about an axis which perpendicularly intersects the longitudinal axis of the arm member 3b.

The chassis 9 has a second driving wheel 8a mounted at its one end through the intermediary of a second driving device 6b and also has an idler wheel 8b mounted at the other end. The first and second driving wheels 7 and 8a have rotating axes which perpendicularly intersect a plane defined by the longitudinal axes of the arm members 3a and 3b and the chassis 9. When a conventional wheel is used as the idler wheel 8b, it may have a fixed rotating axis which is oriented in a certain direction, in general, in the same direction as that of the rotating axes of the driving wheels 7 and 8A.

As shown in Figure 2, the self-traversing vehicle 1 further comprises means 10 for detecting the angle at which the chassis 9 is tilted with respect to the arm member 3b, that is, an angle $\theta$ of intersection between the longitudinal axes of the chassis 9 and the arm member 3b, and a system for controlling the driving power applied to the driving wheels 7 and 8a in a suitable manner.

The detecting means 10 may comprise a suitable known angle detector such as a potentiometer or the like. In this case, if it is necessary to assign the angle $\theta$ of intersection directionality for facilitating electronic processing, the positive direction of the angle can be defined as shown by the arrow in Figure 1.

When the self-traversing vehicle 1 constructed as mentioned above is inserted into a pipe W, the arm members 3a and 3b are pushed away from each other by the biasing force resulting from the biasing means 4 so that each of the wheels 7, 8a and 8b supported by the arm members 3a and 3b bears against inner wall surface portions Wa and Wb which are diametrically opposed to each other. More particularly, the wheels 7, 8a and 8b are pressed against the inner wall surface portions Wa and Wb by the biasing means 4 so that the arm members 3a and 3b act as a brace which is provided between the main body 2 and each of the inner wall surface portions Wa and Wb, whereby the vehicle 1 can be self-supported between the surface portions Wa and Wb by the arm members 3a and 3b on which the biasing force is exerted, and whereby a sufficient friction force can be gained between the wheels and the surface portions for traversing the interior of the pipe regardless of the effect of gravity.

In the interior of a straight pipe, the arm members 3a and 3b, the chassis 9 and the wheels 7, 8a and 8b are all in the same plane and, in the interior of a curved pipe, they are in a plane defined by a diametrical line and the curved axis of the curved pipe. In this case, if the arm members 3a and 3b have the same length and if the biasing forces exerted on the arm members are equal, the main body 2 is substantially situated in the center of the pipe.

With the arrangement mentioned above, the driving wheels 7 and 8a are rotated by the driving devices 6a and 6b, and as a result, the vehicle 1 gains self-traversing force and moves in the interior of the pipe. The rotational direction of each of the driving wheels 7 and 8a is, of course, defined depending upon, for example, whether the vehicle 1 moves in the direction designated by the arrow Tf (Figure 1) or in the reverse direction designated by the arrow Tb (Figure 1).

Furthermore, in the present invention, one of the driving wheels 7 and 8a is dependently controlled with respect to the other driving wheel on the basis of the detected angle $\theta$ of intersection which indicates the degree of tilt between the arm members 3b and the chassis 9.

As a basic example of this controlling mode, the following can be given:

For example, an angle $\theta$ of intersection of 90° is referred to as a standard angle. In other words, it is defined that when the arm members 3a and 3b are perpendicular to the chassis 9, the vehicle 1 assumes the standard posture. In this posture, the vehicle 1 has optimum stability. One of the driving wheels 7 and 8a is dependently controlled with respect to the other driving wheel in such a manner that the standard angle is always maintained.

In Figure 1, for example, suppose that the upper driving wheel 7 and the driving wheel 8a mounted on the chassis 9 are the main driving wheel and the dependent driving wheel, respectively. In this case, when the main driving wheel 7 is rotated in the counterclockwise direction (as seen in Figures 1 and 2) to move the vehicle 1 in the direction designated by the arrow Tf, the angle $\theta$ of intersection detected by a suitable device (not shown) becomes smaller than the standard angle 90°.

Then, the dependent driving wheel 8a is rotated in the clockwise direction so that the angle $\theta$ of intersection is maintained at the standard angle of 90°.

On the other hand, when the main driving wheel 7 is rotated in the clockwise direction to move the vehicle 1 in the direction designated by the arrow Tb, the angle $\theta$ becomes greater than the standard angle of 90°. In this case, the dependent driving wheel 8a is rotated in the counterclockwise direction so that the angle $\theta$ is returned to the standard angle of 90°.

In the case where the main driving wheel 7 is preceded by the chassis 9 with the dependent driving wheel 8a during the movement of the vehicle 1 in the direction desginated by the arrow Tf, the angle $\theta$ of intersection becomes greater than the standard angle of 90°. In this case, the rotational speed of the dependent driving wheel 8a is reduced or the dependent driving wheel 8a is rotated in the reverse direction, whereby the posture of the vehicle 1 is controlled to assume the standard posture. Alternatively, it is possible to use another controlling mode wherein the functions of the driving wheels 7 and 8 are reversed with respect to each other. In particular, by accelerating the driving wheel 7 which acts as a dependsnt driving wheel, the angle $\theta$ of intersection is returned to the standard angle of 90°.

In this way, when the angle $\theta$ of intersection is maintained at the standard angle of 90° or when the angle $\theta$ is equalized to the standard angle, the drive of the dependent driving wheel may be stopped or both of the main and dependent driving wheels may be rotated by the same driving force.

It should be understood that an electronic and mechanical feedback system for performing the controlling operation as mentioned above can be obtained using known electronic and mechanical technologies. In such a servosystem, the control of the dependent driving wheel can be achieved instantaneously by enhancing the gain and loop responsitivities, and conversely it may be flexibly achieved by intentionally lowering them.

In any event, by controlling the operation of the driving wheels in the manner as described above, the standard posture of the self-traversing vehicle is always maintained so that even if the pipe being traversed varies in diameter, the vehicle can still readily traverse the interior thereof. Also, since the operation of the vehicle is almost totally unaffected by gravity, it can take any position in the interior of the pipe.

As shown in Figures 4 and 5 by way of example, each of the driving wheels 7 and 8a may be constructed as a disc-like wheel body 12 having a plurality of radial grooves formed in the periphery thereof and a plurality of lateral small wheels which are provided in the radial grooves and which are mounted on a shaft 14 so that the driving wheels can be circumferentially shifted in the interior of the pipe. Also, the idler wheel 8b may be a wheel which is steerable in any direction. When these wheels are used, the self-traversing vehicle can stably move in the interior of an irregularly shaped pipe on a non-circular cross section. This is because the wheels have a tendency to shift toward the most depressed zones during the movement of the vehicle in the interior of the deformed pipe so that the vehicle traverses along the maximum diameter of the non-circular pipe.

Referring to Figures 2 and 3, in which the arrangement of the self-traversing vehicle (Figure 1) is shown in more detail, the main body 2 includes guide passage for movably receiving the arm members 3a and 3b. A spring 4 forming the biasing means is provided in an intermediate portion of the guide passage. The main body also includes a plate member forming the carrier portion 2a which is mounted thereon perpendicular to the guide passage. The carrier portion 2a can be loaded with various articles such as a camera, a measuring instrument for inspecting or testing, a machine tool, a coating machine, a machine tool, a bucket for parts and etc. The carrier portion 2a may be also loaded with an apparatus for controlling the self-traversing vehicle per se.

The articulation 5 by which the chassis 9 can be tilted with respect to the arm member 3b in the single plane may be constructed by a pivot articulation or the like in which a known radial bearing or the like is used.

The idler wheel 8b which is mounted on the chassis 9 may be a steerable wheel of caster type which is oriented in such a manner that the resistance to which it is subjected upon exerting a force thereon is minimized.

On the other hand, it is preferable to use the circumferentially-shiftable wheel (Figures 4 and 5) as the driving wheels.

The detecting means 10 is, for example, provided on the chassis 9 and may be constituted of a potentiometer or the like, as mentioned above, which is designed to detect the angle $\theta$ of intersction between the longitudinal axes of the arm member 3b and the chassis 9 as a relative rotational angle therebetween.

The driving devices 6a and 6b for the driving wheels 7 and 8a may each comprise a conventional power source such as an electric motor or the like which is connected to the driving wheel through a suitable transmission, for example, including belts, gears or the like for transmitting the driving power from the power source to the driving wheel.

The main body 2 may have a servo-system (not shown) for calculating the difference between the angle θ of intersection detected by the detecting means 10 and the predetermined standard angle. This servo-system controls the rotational speed of the driving motor for the dependent driving wheel so that the self-traversing vehicle assumes the standard or stable posture.

It is also preferable that there be provided a revolution-counter 11 by which the total distance traversed by the vehicle can be measured. The revolution-counter 11, which per se is well known, is associated with, for example, the transmission in such a manner than an input shaft of the revolution-counter is connected thereto.

Furthermore, there may be provided means for detecting the telescopic displacement of the arm members 3a and 3b to determine the extended length thereof during travel of the vehicle, whereby it is possible to know changes in the diameter of the pipe.

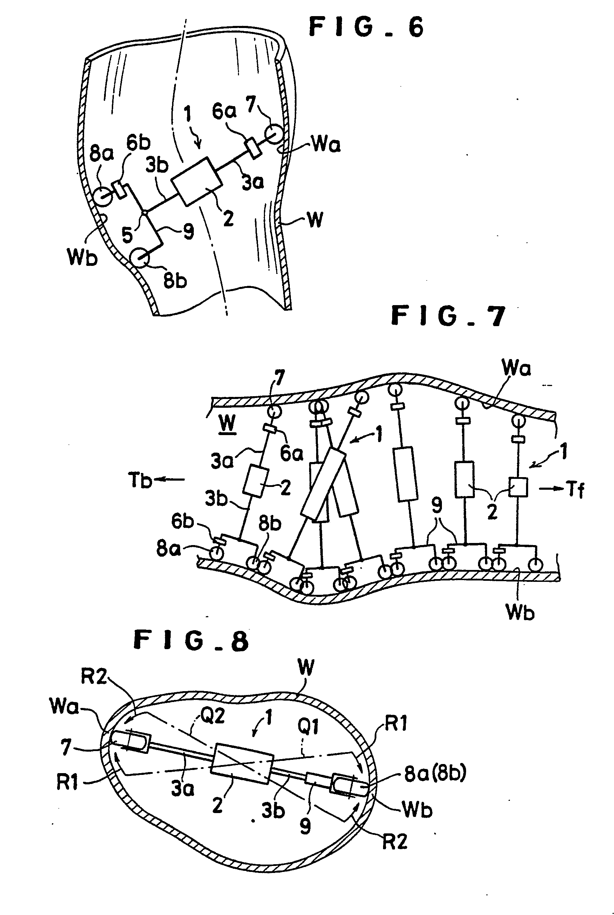

Figures 6 and 8 exaggeratedly show situations in which the vehicle mentioned above traverses under various conditions. In particular, Figure 6 shows the situation in which the vehicle traverses upward in the interior of a vertical pipe and Figure 7 shows the situation in which the vehicle traverses in the interior of a horizontal pipe which has concave and convex portions in its inner surface. In Figure 7, the lower driving wheel 8a mounted on the chassis 9 is used as the main driving wheel and the upper driving wheel 7 is used as the dependent driving wheel. From this it will be understood that either of the driving wheels 7 and 8a can be used as the main driving wheel or the dependent driving wheel.

The chassis 9 is always controlled by the wheels 8a and 8b mounted at its ends to move in the direction along which the pipe W extends, whereby the advancing direction of the vehicle 1 is automatically defined. The dependent driving wheel is dependently rotated with respect to the movement of the main driving wheel by the mechanism and the controlling system described above. In this case, the dependent driving wheel may even go backward.

Since the arm members 3a and 3b are symmetrically extended and contracted in alignment with each other, the main body 2 is substantially maintained at the center of the pipe during the traversing of the vehicle. Also, since the arm members and the chassis are in the same plane, one of the wheels is shifted in the circumferential direction when it is oriented in response to conditions of the pipe, whereby the whole of the vehicle is oriented in response to the circumferential shift so that it traverses the interior of the pipe depending upon the conditions thereof.

Although Figure 7 shows the situation of the vehicle in a two-dimensional manner, it can be said that this situation is shown in a three-dimensional manner because the vehicle is automatically posed in such a manner that it detects the maximum diameter of the pipe.

On the other hand, Figure 8 shows a situation in which the vehicle is circumferentially shifted toward the maximum diameter of the pipe during traversing. In particular, in the case where the cross section of the pipe W is non-circular in shape, if the vehicle is in a position designated by the chain line Q1 and Q2 before it arrives at the position shown in Figure 8, the vehicle is circumferentially shifted (rotated) in the direction designated by the arrows R1 or R2 because the arm members 3a and 3b bear against the inner wall surface of the pipe owing to the biasing force and because the circumferentially-shiftable wheels 7 and 8a and the steerable wheel 8b are used. In this way, the vehicle traverses the interior of the pipe in such a manner that it always assumes the most stable position (maximum diameter) as shown in Figure 8.

According to the arrangement as mentioned above, there is provided a self-traversing vehicle which can automatically alter its advancing direction and its posture depending upon the conditions of the pipe.

On the other hand, in order to carry out inspection, an operation or the like within the pipe by using the self-traversing vehicle, it is also necessary to steer the vehicle in the desired direction.

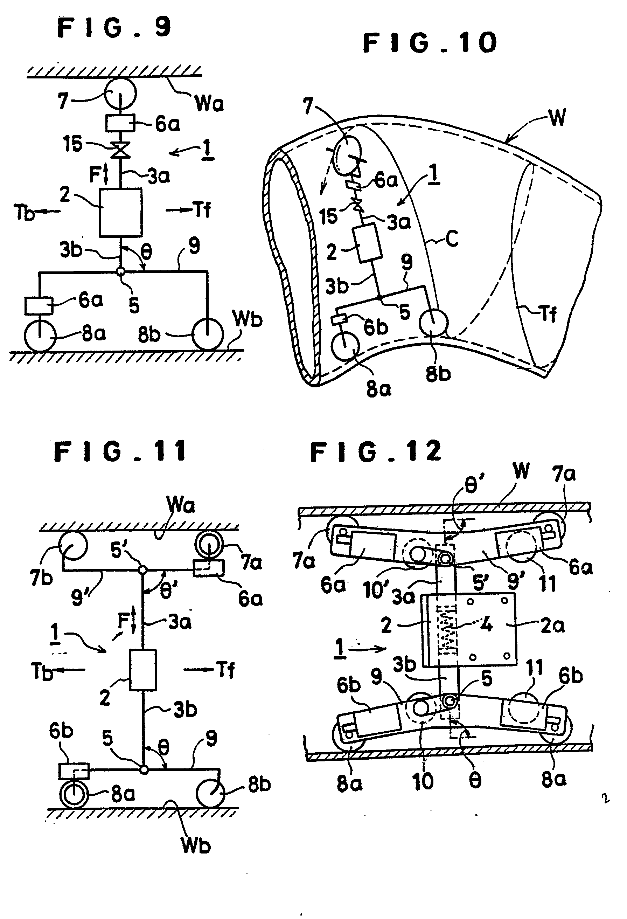

For this purpose, a modified embodiment of the self-traversing vehicle is proposed in Figure 9. The driving wheel 7 which is mounted at the free end of the arm member 3a is steered through a steering means 15 which controls the rotational or steering angle of the wheel 7 around the longitudinal axis of the arm member 3a. In this case, the wheel 7 is always used as the main driving wheel.

Here, the steering angle α of the driving wheel 7 is defined as zero degrees when the axis passing through the shaft of the driving wheel 7 is parallel with the axis passing through the shaft of the driving wheel 8a. Of course, when the steering angle α is equal to zero, the vehicle traverses in the same manner as in the case mentioned above.

If the steering angle α is not equal to zero, the vehicle is rotated about the longitudinal axis of the pipe while advancing therealong, as shown in Figure 10. In this case, each of the three wheels follows a spiral locus as designated by the reference symbol C.

When the steering angle α is equal to 90 degrees, the vehicle continues rotating in the same cross-sectional plane of the pipe.

The driving wheels 7 and 8a are controlled by the driving devices 6a and 6b, respectively, in the same manner as in the case mentioned above except that only the wheel 7 is used as the main driving wheel. In this case, since the main driving wheel is not required to have the circumferentially-shiftable function, a conventional wheel which is only rotatable about a fixed shaft may be used as the main driving wheel.

The steering means serves to control the posture and the advancing direction of the vehicle during travel by changing the steering angle α of the main driving wheel 7. For this reason, the number of revolutions of the main driving wheel tends to become higher than that of the other wheels. Accordingly, in the case where the distance traversed by the vehicle is measured, the revolution-counter 11 should rather be associated with the dependent driving wheel 8a.

Figure 11 schematically shows a second embodiment of the self-traversing vehicle according to the present invention and Figure 12 shows the same in more detail. The arm member 3a which extends from the main body 2 is connected at its free end to an intermediate portion of a chassis 9' through an articulation 5', in the same manner as in the case of the arm member 3b, so that the chassis 9' can be tilted with respect to the longitudinal axis of the arm member 3a, with the angle between the chassis and the axis being designated by the reference symbol θ'. The chassis 9' is provided with a driving wheel 7a at its one end and an idler wheel 7b at the other end, the driving wheel 7a being driven by a driving device 6a which is mounted on the chassis 9'. Alternatively, each of the four wheels 7a, 7b, 8a and 8b may be provided with an independent power source.

In Figures 11 and 12, the articulations 5 and 5' for ensuring the free rotational movement between the arm members 3a and 3b and the chassis 9' and 9 may be easily constructed by radial bearings or the like. Detecting means 10 and 10' are used to detect the angles θ and θ' so that the driving wheels can be cooperatively controlled. In Figures 11 and 12, each of the angles θ and θ' (when these angles are measured from the corresponding arm member to the corresponding chassis, the measured angle is defined as a positive angle) are illustrated as the angles formed between the longitudinal axis of the corresponding arm member and the longitudinal axis of the corresponding chassis. However, this definition of the angles θ and θ' is merely made for the same of convenience for the reason that the longitudinal axis of the each chassis is parallel with a common tangential line of the two wheels mounted thereon. Strictly speaking, each of the angles θ and θ' should be defined as an angle which is formed between the axis of the corresponding arm member and the common tangential line of the two wheels supported thereby. When the angles θ and θ' are equal to each other, the arm members 3a and 3b are always kept perpendicular to the axis C of the pipe W.

The detecting means 10 and 10' for detecting the angles θ and θ' which are formed between the axes of the arm members 3a and 3b and the common tangential lines of the upper wheels 7a, 7b and the lower wheels 8a, 8b, respectively, may be constructed by a potentiometer or the like. In this case, a potentiometer is fixed to each of the chassis 9 and 9'. The potentiometer has a gear mounted on its input shaft. This gear is engaged with a gear which is mounted on the articulation 5 (5'), whereby the rotational angle of the each arm member with respect to the corresponding chassis can be detected. Since the two values indicated by the potentiometers 10 and 10' can be assumed to correspond to the angles θ and θ', the driving wheels are controlled so that the difference between these values is made equal to zero, that is to say, a rectangle defined by the centers of the four wheels 7a, 7b, 8a and 8b forms an isosceles trapezoid in the plane of Figure 11.

It should be understood that various controlling modes can be used for achieving the cooperative and complemental control of the driving wheels. For example, in a basic controlling mode, after the angles θ and θ' are detected, the detected values are compared with each other and then the driving wheel of the chassis associated with the lower value is further accelerated with respect to the driving wheel of the other chassis. In particular, the wheels which are mounted on either of two chassis at its ends are independently controlled only for the traversing of the vehicle, and the equalization of the angles θ and θ' is performed by controlling the wheels which are mounted on the other chassis at its ends. This control of the driving wheels can be performed instantaneously by using a servo-system. If necessary, by lowering the gain, the dependent operation of the driving wheel may be smoothly performed.

In Figure 11, in the case where the vehicle traverses in the direction designated by the arrow Tf and where the lower wheel 8a is used to control traversing of the vehicle, if the angle θ is greater than the angle θ', the equalization of the angles θ and θ' can be performed by rotating the upper wheel 7a clockwise. Also, if the angle θ is smaller than the angle θ', the equalization can be performed by rotating the upper wheel 7a counterclockwise. When the angles θ and θ' are equal to each other, a great friction force occurs in the driving wheels so that the arms members are stabilized.

In this way, the upper and lower wheels are driven with separate signals independently of each other.

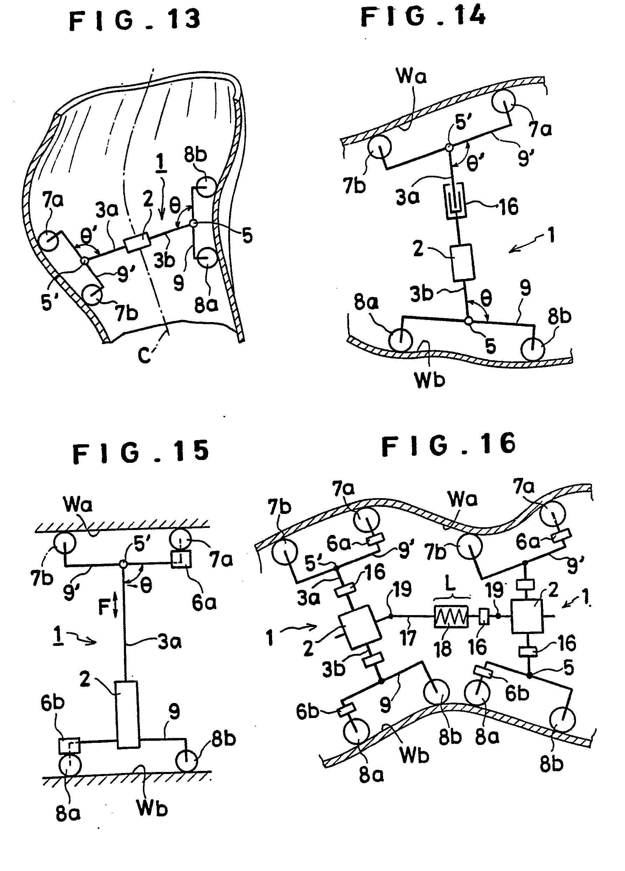

With the arrangement mentioned above, the vehicle can be satisfactorily used in most cases because the arm members can be freely tilted with respect to the chassis at the articulations. However, in the case where the pipe W has, for example, an oval-like cross section and is twisted into a spiral shape, the vehicle is more or less subjected to a twist. In order to overcome this problem, as shown in Figure 14, an articulation 16 (rotary joint) may be intervened in either of the arm members 3a and 3b so that it can be rotated about its axis. Thus, the vehicle can traverse the interior of the twisted pipe because one of the chassis can be rotated about the common axis of the arm members with respect to the other chassis due to the existence of the articulation 16 and because each of the chassis can be tilted at its articulation 5, 5' with respect to the corresponding arm member. If the driving wheels cannot be continuously shifted in the circumferential direction of the pipe, the vehicle will not be able to move smoothly in the circumferential direction. In short, the vehicle will have to move step by step in the peripheral direction during the traversing thereof.

Figure 15 shows a third embodiment of the self-traversing vehicle according to the present invention, wherein the arm member 3b is eliminated and the main body 2 is integrated with the chassis 9, with the arm member 3a being biased by a spring (not shown) so that the wheels bear against the inner wall surface of the pipe. This vehicle is substantially operated in the same way as the second embodiment shown in Figure 11.

In the foregoing embodiments, a single self-traversing vehicle is described as operating by itself. However, two or more of the vehicles can be joined in tandem.

Figure 16 shows an example in which two vehicles constructed substantially according to the second embodiment are joined to each other through a coupling rod member 17. The coupling rod member 17 is provided with elastic means 18 and a detector (not shown) for detecting elastic change (length L) thereof.

The main bodies 2 of the vehicles are respectively connected to the coupling rod member 17 through pivotal articulations 19. One of the coupling rod members 17 is also provided with a rotary articulation 16.

Furthermore, in Figure 16, the arm members 3a and 3b of the respective vehicles are provided with rotary articulations 16.

Use of these rotary articulations 16 enable the vehicles to assume independent postures without interfering with each other. On the other hand, when each of the vehicles is connected to the coupling rod member 17 through a universal joint, it is unnecessary that each of the arm members 3a and 3b be provided with an articulation 16. In other words, it is possible to use the vehicle as shown in Figure 14, in which only the arm member 3a is provided with the rotary articulation 16. Furthermore, when the twist of the pipe is insignificant, it is possible to use even the vehicle as shown in Figure 11, in which the arm members 3a and 3b have no rotary articulations.

In Figure 16, it should be understood that the rotary articulation 16 which is provided in the coupling rod member 17 may be combined with a portion of the main body 2 which is connected to the coupling rod member 17.

In operation, the driving devices 6a and 6b of the two vehicles are controlled so that the length L of the elastic means 18 which is provided in the coupling rod member 17 is always maintained constant.

In particular, supposing that one of the two vehicles is defined as a main vehicle and the other is defined as a dependent vehicle, the main vehicle is controlled so that the driving wheels are driven in the same way as in the first embodiment, whereas the dependent vehicle is controlled so that the length L of the elastic means 18 is maintained equal to a predetermined value. For example, in Figure 16, when the left vehicle is defined as the main vehicle and traverses to the left so that the length L of the elastic means 18 of the coupling rod member 17 tends to increase, the other or dependent vehicle traverses following the main vehicle on the left so that the length L is decreased.

On the other hand, when the left vehicle traverses to the right or when the right vehicle is defined as the main vehicle and traverses to the left, the length L of the elastic means 18 of the coupling rod member 17 tends to decrease. In this case, the vehicle defined as the dependent vehicle is controlled so that it moves away from the other or main vehicle for returning the length L to within a predetermined range.

According to the arrangement as mentioned above, it is apparent that more than two vehicles can be joined in tandem. In any event, as long as the coupling manner and the controlling mode as mentioned above are used, the train of vehicles (which can include more than two vehicles) can be controlled with no interference among the vehicles as if the train of vehicles were a single vehicle.

If an article is to be carried by the train of the vehicles, it is preferable to form the carrier portion at the coupling rod member because it is the most stable part of the train during its traversing action.

As is apparent from the foregoing description, since the self-traversing vehicle according to the present invention has a simple construction, various modifications can be readily made in it by those skilled in the art. For example, the biasing means 4 for biasing the arm members need not necessarily be constructed by a mechanical spring. The biasing means may be constructed by utilizing an electromagnetic force, hydraulic pressure, a pneumatic pressure or the like. In this case, the biasing means can be designed so that the biasing force is in inverse proportion to the displacement of the arm member. Alternatively, the biasing means may also be designed so that the biasing force is constant regardless of the displacement of the arm member.

In the above-mentioned embodiments, only one of the two wheels which are mounted on each chassis is used as a driving wheel. However, all of the wheels of the vehicle may be used as driving wheels. In this case, each of the chassis may be provided with single actuator which drives the two wheels through a differential gear. In particular, the vehicle having the two chassis is provided with two actuators each of which drives the two wheels of the corresponding chassis. In the vehicle in which all of the four wheels are used as driving wheels, a great frictional driving force can be obtained between the inner wall surface and the driving wheels so as to increase the traction of the vehicle.

In the case where the vehicles are joined to each other to form a train, since it is unnecessary to widely pivot the coupling rod member, the rotary articulation 16 may be simply constructed by a more or less flexible member such as a spring.

The wheels should be constructed so that they can be shifted in the circumferential direction when the vehicle traverses the interior of the pipe. However, it is possible to use a wheel different from that shown in Figures 4 and 5. For example, it is possible to use a wheel whose tread is designed so that the wheel is not allowed to slip in the advancing direction but it is allowed to slip in the circumferential direction. It is also possible to use a wheel which is formed of a magnet so that it can be securely rolled on the inner wall surface of the pipe provided the pipe is made of steel or the like.

It has been explained that the vehicle according to the present invention can traverse in the forward and backward directions by using the driving device mounted thereon for self-locomotion. However, it is also possible to move the vehicle in the forward and backward directions by pulling either of two cables connected to the vehicle. Furthermore, the vehicle may be arranged to traverse only in the forward direction by self-locomotion, and be returned in the backward direction by pulling a cable connected thereto. When the vehicle is returned, it is preferable to weaken the biasing force on the arms.

The self-traversing vehicle according to the present invention can be used in a pipe, a cave or the like in which a conventional self-traversing vehicle cannot be moved due to large irregularities in the inner wall surface thereof and/or due to bent, inclined and/or twisted portions thereof.

For this reason, the vehicle according to the present invention can be advantageously utilized in various fields such as at construction sites, in all sorts of industrial plants and the like for the purpose of observation, inspection, maintenance and repair as well as for the conveyance of all sorts of machinery, tools, materials and the like necessary for these purposes. Furthermore, the vehicle can also be utilized to survey the interior configuration of an unknown tunnel-like path.

## Claims

1. A vehicle for traversing the interior of a pipe or the like under self-locomotion which comprises:
a main body (2);
a pair of arm members (3a, 3b) extending outwardly from said main body (2) in opposite directions and disposed in alignment with each other, said arm members (3a, 3b) being movable along the common longitudinal axis thereof;
biasing means (4) for biasing said arm members (3a, 3b) outwardly with respect to said main body (2);
at least one chassis (9) which is pivotally connected to one (3b) of said arm members (3a, 3b) and which is provided with two wheels (8a, 8b);
at least one wheel (7) supported by the other (3a) of said arm members;
a first driving device (6b) for driving at least one of said two wheels (8a, 8b) which are provided on said chassis (9);
a second driving device (6a) for driving said wheel (7) supported by the other (3a) of said arm members;
at least one detecting means (10) for detecting the angle formed between the common longitudinal axis of at least one of said arm members (3a, 3b) and the common tangential line of said two wheels (8a, 8b) of said chassis (9); and
a servo-system for controlling said first and second driving devices (6b, 6a) in response to the detected angle so as to maintain said angle at a predetermined value.

2. A vehicle set forth in Claim 1, wherein the other (3a) of said arm members (3a, 3b) supports two wheels (7a, 7b) through the intermediary of a second chassis (9') on which said two wheels (7a, 7b) are provided, said second chassis (9') being pivotally connected to the other (3a) of said arm members and wherein there is provided second detecting means (10') for detecting a second angle which is formed between the common longitudinal axis of said other arm member (3a) and the common tangential line of the two wheels (7a, 7b) of said second chassis (9'), and said servo-system controls said first and second driving devices (6a, 6b) so that said first and second angles are maintained equal to each other.

3. A vehicle set forth in Claim 2, wherein a rotary articulation (16) is provided in one of said arm members (3a, 3b).

4. A vehicle set forth in Claim 2, wherein a rotary articulation (16) is provided in both of said arm members (3a, 3b).

5. A vehicle set forth in any one of Claims 2 through 4, wherein said first driving device (6b) drives the two wheels (8a, 8b) of said first chassis (9), and said second driving device (6b) drives the two wheels (7a, 7b) of said second chassis.

6. A vehicle set forth in Claim 1, wherein a steering device (15) is provided in either of said arm members (3a, 3b).

7. A vehicle for traversing the interior of a pipe or the like under self-locomotion which comprises:
a main body (2);
an arm member (3a) extending outwardly from said main body (2) and being movable along its longitudinal axis;
biasing means (4) for biasing said arm member (3a) outwardly with respect to said main body;
a first chassis (9') which is pivotally connected to said arm member (3a) and which is provided with two wheels (7a, 7b);
a second chassis (9) which is fixed to said main body (2) and which is provided with two wheels (8a, 8b);
a first driving device (6a) for driving at least one of the two wheels (7a, 7b) which are provided on said first chassis (9');
a second driving device (6b) for driving at least one of the two wheels (8a, 8b) which are provided on said second chassis (9);
detecting means (10) for detecting an angle which is formed between the longitudinal axis of said arm member (3a) and the common tangential line of the two wheels (7a, 7b) of said first chassis (9'); and

a servo-system for controlling said first and second driving devices in response to the detected angle so as to maintain said angle at a predetermined value.

8. A vehicle set forth in Claim 7, wherein a rotary articulation (16) is provided in said arm member (3a).

9. A vehicle set forth in Claim 7 or 8, wherein said first driving device (6a) drives the two wheels (7a, 7b) of said first chassis (9'), and said second driving device (6b) drives the two wheels (8a, 8b) of said second chassis (9).

10. A train comprising two or more self-traversing vehicles, wherein the adjacent self-traversing vehicles are joined to each other by a coupling rod member (17) in which elastic means (18) and at least one rotary articulation (16) are provided and wherein there is provided detecting means for detecting the length of said elastic means (18), and

a servo-system for controlling one of the adjacent self-traversing vehicles in response to the detected length so that the length of said elastic means (18) is maintained at a constant value, and each of said self-traversing vehicles is constructed in accordance with the vehicle set forth in any one of Claims 1 through 9.

**Patentansprüche**

1. Selbstfahrendes Fahrzeug zum Durchfahren des Innern eines Rohres oder dergleichen umfassend:

einen Grundkörper (2);

zwei von Grundkörper (2) in einander entgegengesetzte Richtungen nach außen abstehende, zueinander fluchtend angeordnete Arme (3a, 3b), wobei die Arme (3a, 3b) längs ihrer gemeinsamen Längsachse bewegbar sind;

Vorspannmittel (4) um die Arme (3a, 3b) bezüglich des Grundkörpers (2) nach außen vorzuspannen;

mindestens ein Fahrgestell (9), das schwenkbar mit einem (3b) der Arme (3a, 3b) verbunden und das mit zwei Rädern (8a, 8b) versehen ist;

mindestens ein Rad (7), das von dem anderen (3a) der Arme (3a, 3b) gehalten wird;

eine erste Antriebseinheit (6b) zum Antreiben mindestens eines der zwei am Fahrgestell (9) vorgesehen Räder (8a, 8b);

eine zweite Antriebseinheit (6a) zum Antreiben des Rades (7), das vom anderen (3a) der Arme gehalten wird;

mindestens eine Detektoranordnung (10) zum Ermitteln des Winkels zwischen der gemeinsamen Längsachse mindestens eines der Arme (3a, 3b) und der gemeinsamen Tangentiallinie der zwei Räder (8a, 8b) des Fahrgestells (9); und

ein Servosystem zum Steuern der ersten und der zweiten Antriebseinheit (6b, 6a) abhängig vom ermittelten Winkel, um so den Winkel auf einem vorgegebenen Wert zu halten.

2. Fahrzeug nach Anspruch 1, wobei der andere (3a) der Arme (3a, 3b) zwei Räder (7a, 7b) unter Zwischenschaltung eines zweiten Fahrgestells (9') trägt, an dem die zwei Räder (7a, 7b) vorgesehen sind, wobei das zweit Fahrgestell (9') drehbar mit dem anderen (3a) der Arme verbunden ist, wobei ferner eine zweite Detektoranordnung (10') zum Ermitteln eines zweiten Winkels vorgesehen ist, der zwischen der gemeinsamen Längsachse des anderen Arms (3a) und der gemeinsamen Tangentiallinie der zwei Ränder (7a, 7b) des zweiten Fahrgestells (9') gebildet wird, und wobei das Servosystem die erste und die zweite Antriebseinheit (6a, 6b) so steuert, daß der erste und der zweite Winkel einander gleich sind.

3. Fahrzeug nach Anspruch 2, wobei in einem der Arme (3a, 3b) ein Drehgelenk (16) vorgesehen ist.

4. Fahrzeug nach Anspruch 2, wobei in beiden Armen (3a, 3b) ein Drehgelenk (16) vorgesehen ist.

5. Ein Fahrzeug nach einem der Ansprüche 2 bis 4, wobei die erste Antriebseinheit (6b) die zwei Räder (8a, 8b) der ersten Fahrgestells (9) antreibt, und wobei die zweite Antriebseinheit (6b) die zwei Räder (7a, 7b) des zweiten Fahrgestells antreibt.

6. Fahrzeug nach Anspruch 1, wobei in einem der Arme (3a, 3b) eine Lenkeinheit (15) vorgesehen ist.

7. Selbstfahrendes Fahrzeug zum Durchfahren des Innern eines Rohres oder dergleichen, umfassend:

einen Grundkörper (2);

einem vom Grundkörper (2) nach außen gerichteten Arm (3a), der längs seiner Längsachse bewegbar ist;

Vorspannmittel (4) um den Arm (3a) bezüglich des Grundkörpers nach außen vorzuspannen;

ein erstes Fahrgestell (9'), das drehbar mit dem Arm (3a) verbunden und mit zwei Ränder (7a, 7b) versehen ist;

ein zweites Fahrgestell (9), das am Grundkörper (2) befestigt und mit zwei Rädern (8a, 8b) versehen ist;

eine erste Antriebseinheit (6a) zum Antreiben mindestens eines der zwei am ersten Fahrgestell (9') vorgesehenen Räder (7a, 7b);

eine zweite Antriebseinheit (6b) zum Antreiben mindestens eines der zwei am zweiten Fahrgestell (9) vorgesehenen Räder (8a, 8b);

eine Detektoranordnung (10) zum Ermitteln eines Winkels zwischen der Längsachse des Arms (3a) und der gemeinsamen Tangentiallinie der zwei Räder (7a, 7b) des ersten Fahrgestells (9'); und

ein Servosystem zum Steuern der ersten und der zweiten Antriebseinheit abhängig vom ermittelten Winkel, um so den Winkel auf einem vorbestimmten Wert zu halten.

8. Fahrzeug nach Anspruch 7, wobei in Arm (3a) ein Drehgelenk (16) vorgesehen ist.

9. Fahrzeug nach Anspruch 7 oder 8, wobei die erste Antriebseinheit (6a) die zwei Räder (7a, 7b) des ersten Fahrgestells (9') und die zweite Antriebs einheit (6b) die zwei Räder (8a, 8b) des zweiten Fahrgestells (9) antrbibt.

10. Zug mit zwei oder mehr selbstfahrenden Fahrzeugen, wobei die einander benachbarten selbstfahrenden Fahrzeuge durch eine Kupplungsstange (17) miteinander verbunden sind, in der elastische Mittel (18) und mindestens ein Drehgelenk (16) vorgesehen sind, wobei ferner eine Detektoranordnung zum Ermitteln der Weglänge der elastischen Mittel (18) sowie ein Servosystem vorgesehen sind, das eines der einander benachbarten selbstfahrenden Fahrzeuge abhängig von der ermittelten Weglänge so steuert, daß die Weglänge der elastischen Mittel (18) auf einem konstanten Wert gehalten wird, und wobei jedes der selbstfahrenden Fahrzeuge gemäß dem in einem der Ansprüche 1 bis 9 genannten Fahrzeug aufgebaut ist.

**Revendications**

1. Véhicule destiné à parcourir l'intérieur d'un conduit ou d'un passage analogue dans des conditions d'autolocomotion qui comprend:

un corps principal (2);

deux bras (3a, 3b) qui s'étendent vers l'extérieur à partir du corps principal (2), en sens opposés et en ligne l'un avec l'autre, ces bras (3a, 3b) étant mobiles le long de leur axe longitudinal commun;

un moyen de sollicitation élastique (4) pour rappeler les bras (3a, 3b) vers l'extérieur par rapport au corps (2);

au moins un châssis (9) qui est articulé à un (3b) des bras (3a, 3b) et est pourvu de deux roues (8a, 8b);

au moins une roue (7) supportée par l'autre (3a) des bras;

un premier dispositif d'entraînement (6b) pour entraîner au moins une des deux roues (8a, 8b) prévues sur le châssis (9);

un second dispositif d'entraînement (6a) pour entraîner la roue (7) supportée par l'autre bras (3a);

au moins un dispositif détecteur (10) pour détecter l'angle formé entre l'axe longitudinal commun d'au moins un des bras (3a, 3b) et la ligne tangentielle des roues (8a, 8b) du châssis (9), et

un système d'asservissement pour commander le premier et le second dispositif d'entraînement (6b, 6a) en réaction à l'angle détecté, de manière à maintenir cet angle à une valeur prédéterminée.

2. Véhicule suivant la revendication 1, dans lequel l'autre (3a) des bras (3a, 3b) support deux roues (7a, 7b) par l'intermédiaire d'un second châssis (9') sur lequel les deux roues (7a, 7b) sont prévues, le second châssis (9') étant articulé à l'autre (3a) des bras et dans lequel est prévu un second dispositif détecteur (10') pour détecter un second angle qui est formé entre l'axe longitudinal commun de l'autre bras (3a) et la ligne tangentielle commune des deux roues (7a, 7b) du second châssis (9'), et le système d'asservissement commande le premier et le second dispositif d'entraînement (6a, 6b), de telle sorte que le premier et le second angle soient maintenus égaux l'un à l'autre.

3. Véhicule suivant la revendication 2, dans lequel une articulation tournante (16) est préue dans un des deux bras (3a, 3b).

4. Véhicule suivant la revendication 2, dans lequel une articulation tournante (16) est prévue dans les deux bras (3a, 3b).

5. Véhicule suivant l'une quelconque des revendications 2 à 4, dans lequel le premier dispositif d'entraînement (6b) entraîne les deux roues (8a, 8b) du premier châssis (9) et le second dispositif d'entraînement (6a) entraîne les deux roues (7a, 7b) du second châssis.

6. Véhicule suivant la revendication 1, dans lequel un dispositif de direction (15) est prévu dans l'un ou l'autre des deux bras (3a, 3b).

7. Véhicule destiné à parcourir l'intérieur d'un condiut ou d'un passage analogue dans des conditions d'autolocomotion qui comprend:

un corps principal (2);

un bras (3a) qui s'étend vers l'extérieur depuise le corps principal (2) et qui est mobile le long de son axe longitudunal;

un moyen de rappel élastique (4) pour solliciter le bras (3a) vers l'extérieur par rapport au corps principal;

un premier châssis (9) qui est fixé au corps principal (2) et qui est pourvu de deux roues (8a, 8b);

un second châssis (9') qui est articulé au bras (3a) et qui est pourvu de deux routs (7a, 7b);

un premier dispositif d'entraînement (6a) pour entraîner au moins une des deux roues (7a, 7b), prévues sur le second châssis (9')

un second dispositif d'entraînement (6b) pour entraîner au moins une des deux roues (8a, 8b) prévues sur le premier châssis (9);

un dispositif de détection (10) pour détecter un angle qui est formé entre l'axe longitudinal du bras (3a) et la ligne tangentielle commune des deux roues (7a, 7b) du second châssis (9'), et

un système d'asservissement pour commander le premier et le second dispositif d'entraînement et réaction à l'angle détecté, de manière à maintenir cet angle à une valeur prédéterminée.

8. Véhicule suivant la revendication 7, dans lequel l'articulation tournante (16) est prévue dans le bras (3a).

9. Véhicule suivant la revendication 8 ou 9, dans lequel le premier dispositif d'entraînement (6a) entraîne les deux roues (7a, 7b) du second châssis (9') et le second dispositif d'entraînement (6b) entraîne les deux roues (8a, 8b) du premier châssis (9).

10. Train comprenant deux ou plus de deux véhicules automoteurs, dans lequel les véhicules automoteurs adjacents sont reliés l'un à l'autre par une barre d'attelage (17) comportant un moyen élastique (18) et au moins une articulation tournante (16) et dans lequel est prévu un dispositif de détection destiné à détecter la longueur du moyen élastique (18) et,

un système d'asservissement pour commander un des véhicules automoteurs adjacents en réaction à la longueur détectée, de telle sorte que la longueur du moyen élastique (18) soit maintenue à une valeur constante et chaque véhicule automoteur est construit conformément au véhicule suivant l'une quelconque des revendications 1 à 9.

EP 0 177 112 B1

# F I G . 1

# F I G . 2

# F I G . 3

# F I G . 4

# F I G . 5

1

**F I G . 6**

**F I G . 7**

**F I G . 8**

# FIG. 9

# FIG. 10

# FIG. 11

# FIG. 12

# F I G . 1 3

# F I G . 1 4

# F I G . 1 5

# F I G . 1 6